# EUROPEAN PATENT APPLICATION

(11) **EP 4 147 944 A1**
(43) Date of publication of application: **15.03.2023**
(21) Application number: 21196075.2
(22) Date of filing: 10.09.2021
(51) Int. Cl.: B62B 9/14

(54) **CANOPY AND CHILD CARRIER WITH CANOPY**

(71) Applicant: Thule Sweden AB, 335 04 Hillerstorp (SE)
(72) Inventor: Larsson, Germund, 33376 Reftele (SE); Heredia, Homero, 55472 Jönköping (SE); Ferman, Magnus, 33154 Värnamo (SE)
(74) Representative: Wallentin, Lars

(57) **Abstract**

Disclosed is a canopy for a child carrying unit. The canopy comprises a flexible cover for at least partially covering a child. The flexible cover comprises a multi-layer structure in which adjacent ones of two or more flexible cover portions are arranged in an overlapping manner. The canopy further comprises a supporting structure configured to support the flexible cover portions such that at least a portion of an air supply channel for passing air from an outside of the canopy to an inside of the canopy is formed between the flexible cover portions.

## Description

### TECHNICAL FIELD

The present invention relates to improvements of canopies for child carriers, in particular to improvements of canopies mountable on child carriers such as strollers.

### BACKGROUND

Canopies for shielding children seated in strollers or other child carrying units are known. Such canopies are typically used for shielding a seated child from sun, wind, or rain. The canopies create a shielded space in which the seated child is protected. Often, such canopies are designed such that air may only pass towards the child through an opening provided between a deployed canopy and other members of the child carrier, such as a cover or a seat. Especially in hot weather conditions, heat may accumulate in the shielded space. Furthermore, air supplied to the shielded space may be polluted.

### SUMMARY OF THE INVENTION

It is an object of the present disclosure to provide an improved configuration of a canopy in which fresh air may be supplied to the interior space of the canopy.

The object is solved by a canopy according to the independent claim. Advantageous further formations are subject of the dependent claims.

Different features of possible configurations of the disclosed canopy may be gleaned from the following summary, the detailed description as well as from the drawings.

Disclosed is a canopy for a child carrying unit. The canopy comprises a flexible cover for at least partially covering a child. A flexible cover may be understood as a cover which is made of a flexible material, for example a sheet like material, in particular a sheet-like material which may be non-elastic but bendable. The flexible cover may comprise a multi-layer structure in which adjacent ones of two or more flexible cover portions are arranged in an overlapping manner. The canopy further comprises a supporting structure which is configured to support the flexible cover portions such that at least a portion of an air supply channel for passing air from an outside of the canopy to an inside of the canopy is formed between the flexible cover portions.

According to an embodiment, the supporting structure may comprise at least one rigid support member which is configured and formed to at least partially support the flexible cover portions. In this way, the flexible cover portions may be held at specific positions and at a predetermined distance from each other thereby creating a space between them.

The rigid support member may comprise a first frame portion for supporting an outer flexible cover portion of the flexible cover. The rigid support member may further comprise a second frame portion for supporting an inner flexible cover portion of the flexible cover. The first frame portion and the second frame portion may extend at a distance from and along each other over a predetermined length of the support member.

At least one rigid support member may be U-shaped. In one configuration, each rigid support member is U-shaped. The rigid support members may be configured to provide the flexible cover with a predetermined fixed main shape. The main shape may also be referred to as basic shape. In addition or alternatively, at least one rigid support member may comprise a skeleton structure with the first frame portion and the second frame portion being formed as curved beams. The beams may extend in a plane along a main extension direction and may be coupled to each other at predetermined coupling portions by means of struts. In addition or alternatively, the second frame portion may be arranged inside the first frame portion. In addition or alternatively, the first frame portion and the second frame portion may be U-shaped. Each of the U-shaped first frame portion and the second frame portion may comprise a base portion and two leg portions extending from the base portion. End portions of the leg portions of the second frame portion may be fixedly coupled to leg portions of the first frame portion at a coupling section. Adjacent legs of the first frame portion and the second frame portion may be arranged in a wedge-like manner, for example such that a distance between adjacent legs decreases towards the coupling section.

Each rigid support member may be integrally formed, for example by casting or molding. The beams may form an opening between them, for example a crescent like opening.

The air supply channel may comprise an inlet portion having an inlet. The supply channel may comprise an outlet portion having an outlet. The outlet may be defined by an air-permeable structure provided in the flexible cover portion. The supply channel may extend between the inlet and the outlet in a meandering manner. The inlet portion may be configured to extend from a lateral outer side of the canopy towards a middle portion of the canopy. The middle portion of the canopy may be defined as a region at or near a middle plane of the canopy. The middle plane may extend in vertical upward and in forward direction.

The inlet portion may extend in lateral direction through the canopy from one lateral side of the canopy to the other lateral side of the canopy such that two inlets on opposite sides of the canopy fluidly connect the inlet portion with the outside. The inlet portion and the outlet portion may be fluidly coupled at the middle portion of the canopy. The inlet portion may be configured such that its cross-sectional area increases from the inlet towards the middle portion.

The outlet portion may be configured such that its cross-sectional area decreases in an extension direction away from the middle portion. The outlet portion may be pocket shaped, for example in a wedge like or funnel shape. In the outlet portion, the inner flexible cover portion may comprise an air outlet. The air outlet may be defined by an air-permeable layer allowing air to pass the inner flexible cover portion. The inner flexible cover portion may comprise or may be formed by such an air-permeable layer.

The air supply channel may be configured for supplying pressurized air to the outlet portion such that an overpressure is generated in the outlet portion forcing the pressurized air through the inner flexible cover portion. The shape of the outer flexible cover portion and the shape of the inner flexible cover portion may be only defined by the shape of the at least one rigid support member. The inlet portion may be at least partially limited by the outer flexible cover portion and an intermediate flexible cover portion. The outlet portion may be at least partially limited by the inner flexible cover portion and the intermediate flexible cover portion. An edge portion of the intermediate flexible cover portion may be at least partially positioned between the outer flexible cover portion and the first frame portion in an overlapping region of the intermediate flexible cover portion and the outer flexible cover portion. Accordingly, an edge portion of the intermediate flexible cover portion may be sandwiched between the outer flexible cover portion and the first frame portion.

Two rigid support members may be provided. The flexible cover portions may be supported on the two rigid support members thereby creating the inlet portion and the outlet portion.

An opening may be provided in a middle portion of the intermediate flexible cover portion. An edge portion of the intermediate flexible cover portion defining or limiting the opening may be fixedly held at a distance from the outer flexible cover portion and may be directly or indirectly fixedly coupled to the two rigid support members for example at a position between the first frame portion and the second frame portion.

Two outlet portions may be provided on opposite interior sides of the canopy. Each of the two outlet portions may be configured to direct an air flow towards a head location portion of an interior space of the canopy. Each rigid support member may be pivotably coupled to a coupling portion for coupling the canopy to the child carrying unit.

In addition or alternatively, the supporting structure may further comprise an adjustable support member pivotably coupled to the coupling portion and movable between a deployed configuration in which the support member is positioned remote from an adjacent rigid support member and a front portion of the flexible cover spanned between the rigid support member and the support member is tensioned, and a retracted configuration in which the support member is folded against the adjacent rigid support member. The front portion may comprise a window and an openable and closable flap for temporarily covering the window.

According to an embodiment, the canopy further comprises an air supply device at least partially arranged in the air supply channel. The rigid support member may be configured to support the air supply device and the flexible cover thereon. The air supply device may be arranged in the canopy such that it is concealed within the multi-layer portion when the canopy is viewed from outside. Alternatively, the air supply device may be fluidly coupled to the air supply channel by means of one or more air channels. At least one rigid support member may be configured to support an air supply interface and the flexible cover thereon. The air supply interface may also be indirectly coupled to a rigid support member by being mounted to a flexible cover portion which itself is supported on the rigid support member. The air supply interface may be coupled to a remote air supply device, in particular an air supply device which is arranged outside the canopy, for example on and/or under a child seat or bassinet of the stroller or on a supporting portion on a stroller chassis and/or in a cargo compartment of the stroller. In this way, it is possible to accommodate the air supply device outside of the canopy.

According to an embodiment, the air supply device comprises a ventilation device and/or a filtering device and/or a rigid housing having an inlet and at least one outlet. The ventilation device and the filtering device may be arranged in a flow path between the inlet and the outlet. The air supply device may be configured such that an inlet airflow direction is different from an outlet airflow direction. The air supply device may comprise an outer portion facing the outer flexible cover portion. The outer portion may be a rigid wall of a housing of the air supply device. The inlet may be provided in the outer portion. The air supply device may further comprise an inner portion facing an interior space of the canopy. The inner portion may comprise accommodating sections for accommodating a replaceable filtering device in the air supply channel.

According to an embodiment, the rigid support member may comprise a mounting portion configured to be coupled to a lateral portion of the air supply device. In addition or alternatively the mounting portion may be configured to hold the air supply device such that a gap is created between the outer flexible cover portion of the flexible cover and the air supply device. The gap may form a part of the air supply channel.

According to an embodiment, the mounting portion may be formed by a bridging portion coupled to the first frame portion at a first end portion thereof and to the second frame portion at a second end portion thereof. The bridging portion may comprise a shape such that at least a middle portion thereof is offset from the first frame portion towards the second frame portion so that a supporting surface for mounting the flange portion is inwardly offset from the first frame portion.

According to an embodiment, the canopy may comprise two rigid support members. The air supply device may be fixedly mounted or fixedly mountable to the rigid support members in a suspended manner.

According to an embodiment, the supporting structure may further comprise a reinforcing portion configured to provide a stiffened support of one rigid support member against the child carrying unit. The reinforcing portion may accommodate or may be at least partially formed by an accumulator electrically coupled to the air supply unit.

According to an embodiment, an inlet opening of the air supply channel is provided in a lateral side of the canopy. The inlet opening may be configured so as to be opened in downward direction when the canopy is mounted on the child carrying unit.

According to an embodiment, the air supply channel may comprise an outlet portion separated from an inlet portion by means of a layer of the multi-layer structure. The air supply channel may be configured such that an airflow direction in the outlet portion is at least partially opposite to an airflow direction in the inlet portion. Accordingly, the airflow direction may be substantially reversed when air is flowing from the inlet portion into the outlet portion.

According to an embodiment, the flexible cover may be made from a fabric and may at least partially comprise waterproof portions at least in sections covering the air supply device and/or an accumulator electrically coupled to the air supply device. According to an embodiment, a child carrier is provided. The child carrier may comprise a child carrying unit, a frame structure for supporting the child carrying unit movably on the ground, and a canopy. The canopy may comprise one or more of the features as described before in connection with the different embodiments and configurations of the canopy. The canopy may be mounted on the child carrying unit for covering at least a portion of the child carrying unit at which the head of the child is positioned during use of the child carrier.

According to an embodiment, at least a portion of the air supply device, for example a ventilation device and/or a filtering device, is/are provided remote from said canopy. For example, at least one of a ventilation device and a filtering device may be provided on a portion of the child carrying unit such as a seat backrest or under a bassinet base and/or on the frame structure, for example in a cargo basket arranged on the frame structure. The portion of the air supply device which is arranged remote and outside of the canopy may be fluidly coupled to the air supply channel by means of one or more air channels.

Further features of the present invention will become apparent from consideration of the information contained above as well as in or in combination with the following detailed description, drawings, and claims. Additional features and advantages may be gleaned by the person skilled in the art from the following description of exemplary embodiments, and the attached drawings.

### BRIEF DESCRIPTION OF THE DRAWINGS

The accompanying drawings, which are incorporated herein and form part of the specification, illustrate embodiments and, together with the description, further serve to explain the principles of the embodiments and to enable a person skilled in the art to make and use the embodiments.
Figure 1 shows an enlarged section of a canopy according to an embodiment, which is mounted on a bassinet of a stroller.
Figure 2 shows a perspective view of a canopy according to an embodiment, which is mounted on a stroller.
Figure 3 shows a perspective view of a stroller according to an embodiment, which comprises a canopy according to an embodiment.
Figure 4 shows a perspective view of a supporting structure of a canopy according to an embodiment.
Figure 5 shows a side view of a supporting structure of a canopy according to an embodiment.
Figure 6 shows a perspective view of a child seat of a stroller with a canopy according to an embodiment mounted thereon.
Figure 7 shows a perspective view of a bassinet of a stroller with a canopy according to an embodiment mounted thereon.

The features and advantages of the embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION OF EMBODIMENTS

Embodiments and modifications according to different aspects of the present disclosure will be described in the following with reference to the drawings. In general, the embodiments and modifications relate to improvements of canopies. While in the following, a canopy for a stroller will be exemplarily described as such a canopy, it is noted that such canopies may also be used in other configurations, for example in a child carrier carried on the back or in a bassinet.

A canopy 100 according to an embodiment will be described with reference to the figures.

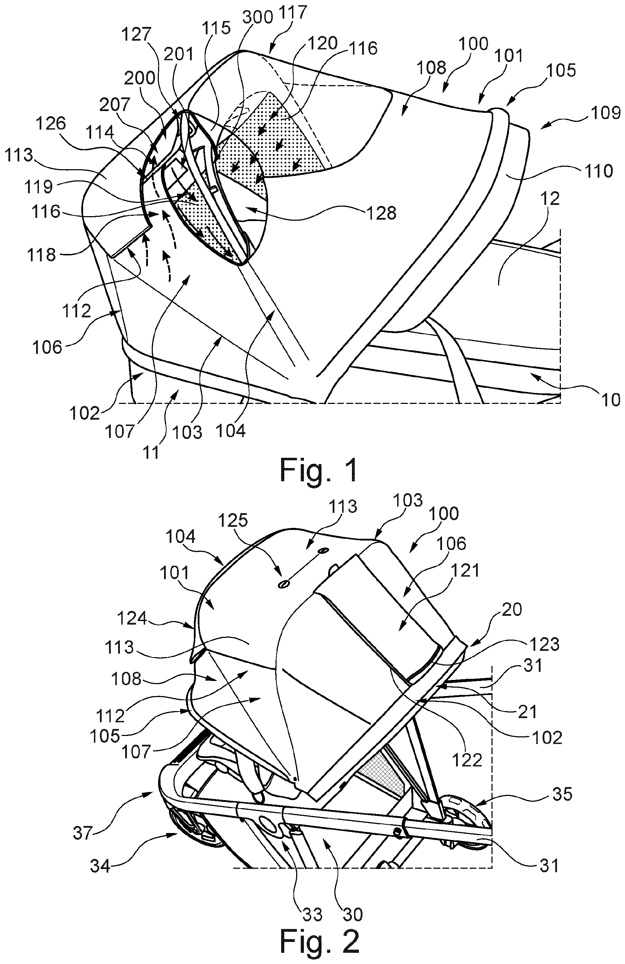

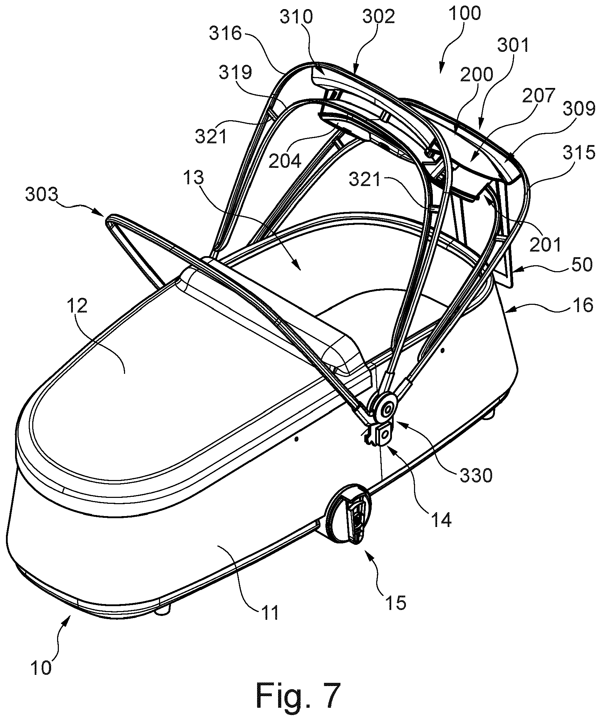

Figure 1 shows a perspective view of the canopy 100 according to an embodiment. The canopy 100 is mounted on a child carrying unit 10 which itself may be removably mountable on a supporting frame of a stroller by means of a coupling section 15 (see Figure 7). In the embodiment, the child carrying unit 10 is a bassinet for a child. The child carrying unit 10 comprises a bassinet base 11 and a cover portion 12, the bassinet base comprising a trough-like shape defining an interior space 13 for a child. The canopy 100 is coupled to the bassinet base 11 by means of a coupling portion 330 which will be later described in greater detail. The coupling portion 330 is detachably coupled to a receiving portion 14 provided on the child carrying unit 10 as is shown in Figure 7.

The canopy 100 comprises a cover portion 101 which may also be referred to as flexible cover 101 since the same comprises flexible cover portions 106, 107, 108, 113, 116. The cover portion 101 and its configuration is shown in Figures 1 to 3. The flexible cover portions 106, 107, 108, 113, 116 may be made from sheet like flexible materials and may include fabric portions and/or flexible plastic sheet portions.

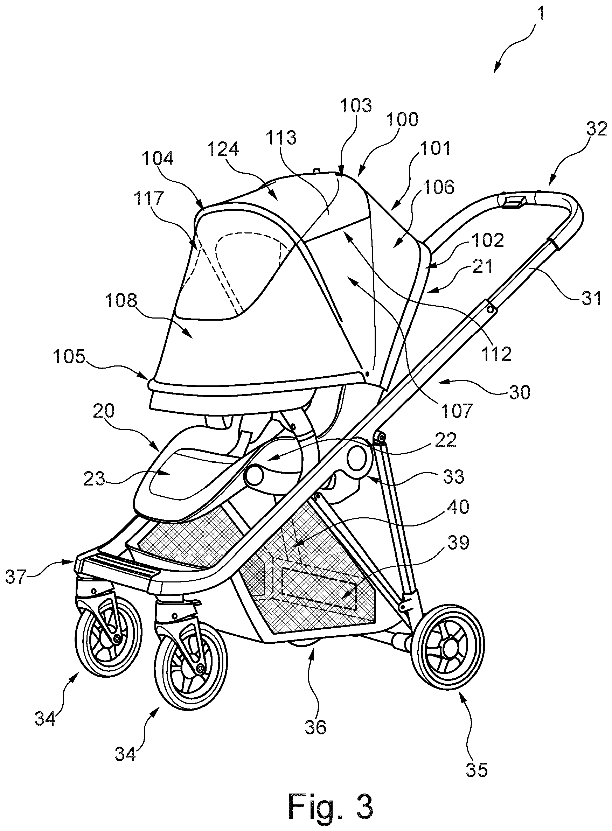

Flexible cover portion 106 may define a rear cover portion. Flexible cover portion 107 may define a middle or intermediate cover portion. Flexible cover portion 108 may define the front cover portion. A window 117 in the form of a transparent portion of plastics material may be provided in flexible cover portion 108. Furthermore, a flexible cover portion 124 may be arranged on flexible cover portion 108 and may be configured to removably cover the window 117. Flexible cover portion 124 may be configured as an openable and closable flap for temporarily covering the window 117. A rear end portion 102 of the cover portion 101 may be configured couplable to the child carrying unit 10, for example to the bassinet base 11 as shown in Figure 1, or to a seat backrest 21 of a child carrying unit 20, in particular a child seat 20 as shown in Figures 2 and 3. The child seat 20 may further comprise a seating portion 22, a footrest portion 23 and a safety bar 26 pivotably coupled to the seating portion 22 by means of a pivot 25. A forward end portion 109 may be configured as a shielding lip 110.

The cover portion 101 may comprise a first supporting portion 103, a second supporting portion 104 and a third supporting portion 105. Each of the supporting portions 103, 104, 105 is configured to be supported by a supporting structure 300 of the canopy 100. The first supporting portion 103 defines a transition between the rear flexible cover portion 106 and the middle cover portion 107. The second supporting portion 104 defines a transition between the middle cover portion 107 and the front cover portion 108. The third supporting portion 105 defines a transition between the front cover portion 108 and the forward end portion 109.

The cover portion 101 may be fixed to the supporting structure 300 at the supporting portions 103, 104, 105. For example, the supporting portions may comprise or define accommodating portions 115, for example tube like pockets, in which elements of the supporting structure 300 may be accommodated. It is also possible that the supporting portions are fixed to elements of the supporting structure 300, for example by clamping, gluing, riveting, or sewing.

In the configuration according to the embodiment, an air supply channel 114 is formed in the region of the middle or intermediate flexible cover portion 107. The air supply channel 114 is configured to supply air to a region of the canopy which is close to the head of a seated child. More precisely, flexible cover portion 107 forms part of a multi-layer structure in which the air supply channel 114 is formed between adjacent flexible cover portions that are arranged in an overlapping manner. In the configuration as shown in Figure 1, flexible cover portion 107 forms an intermediate flexible cover portion 107. Accordingly, the flexible cover 101 may at least partially comprise a multilayer structure in which adjacent ones of two or more flexible cover portions are arranged in an overlapping manner. The multilayer structure may comprise flexible cover portions 107, 113, 116. Flexible cover portion 107 may form an intermediate flexible cover portion. Flexible cover portion 113 may define an outer flexible cover portion and flexible cover portion 116 may define an inner flexible cover portion.

At least a portion of the air supply channel 114 may be formed between flexible cover portions 107, 113, 116 of the multilayer structure. The supporting structure 300 as mentioned before may be configured to support the flexible cover portions 107, 113, 116 such that the air supply channel 114 is formed between the flexible cover portions 107, 113, 116. In other words, the supporting structure 300 is configured to hold portions of the cover portion 101 in such positions that an interior space is created between the flexible cover portions 107, 113, 116.

The air supply channel 114 may comprise one or more inlet portions 118 each having an inlet 112. In the embodiment, the configuration comprises two inlet portions 118 with two inlets 112 which are provided on opposite lateral outer sides of the canopy 100. Each inlet 112 may be configured so as to be opened in downward direction when the canopy 100 is mounted on the child carrying unit 10, 20. In this way, rainwater is prevented from entering the air supply channel 114.

Furthermore, the air supply channel 114 may comprise one or more outlet portions 119 having an outlet 120. In the embodiment, the configuration comprises two outlet portions 119 with two outlets 120 which are provided on opposite lateral inner sides of the canopy 100. According to an embodiment, the outlet portion 119 is separated from the inlet portion 118 by means of the intermediate flexible cover portion 107 of the multi-layer structure. The air supply channel 114 may be configured such that an airflow direction in the outlet portion 119 is at least partially opposite to an airflow direction in the inlet portion 118.

In the embodiment, an opening is provided in a middle portion of the intermediate flexible cover portion 107. The opening is defined by an inner edge portion 126 of the intermediate flexible cover portion 107. The inlet portions 118 and the outlet portions 119 are fluidly coupled through the opening formed by the inner edge portion 126. Accordingly, air may flow through an inlet 112, the inlet portion 118, the opening, the outlet portion 119 and finally through the outlet 120 into an interior space 128 of the canopy 100. In this way, a meandering flow path may be created. The inner edge portion 126 may be fixedly held at a distance from the outer flexible cover portion 113 and may be directly or indirectly fixedly coupled to the supporting structure 300.

The flexible cover 101 may be made from a fabric and may comprise waterproof portions at least in sections. For example, the outer flexible cover portion 113 may comprise a waterproof material at least in a region where the opening in the intermediate flexible cover portion 107 is provided. In this way, intrusion of rainwater into the opening region is prevented. Providing the outer flexible cover portion 113 with a waterproof material may also protect an air supply device arranged in the opening and configured to suck air through the inlet portion and output pressurized air into the outlet portion, for example an air supply device 200 that will be described later.

Each outlet 120 may be defined by an air-permeable structure provided in the flexible cover portion 116. The inner flexible cover portion 116 may thus comprise an outlet 120, wherein the outlet 120 may be defined by an air-permeable layer allowing air to pass the inner flexible cover portion 116. The inlet portion 118 may be configured to extend from a lateral outer side of the canopy 100 towards the middle portion 125 of the canopy. The inlet portion 118 may extend laterally through the canopy 100 from one lateral side of the canopy 100 to the other lateral side of the canopy 100 such that two inlets 112 on opposite sides of the canopy 100 fluidly connect the inlet portion 118 with the outside. The inlet portion 118 and the outlet portion 119 may be fluidly coupled at the middle portion 125, for example through the opening defined by the inner edge portion 126 as mentioned before. The inlet portion 118 may be configured such that its cross-sectional area increases from the inlet 112 towards the middle portion 125. The outlet portion 119 may be configured such that its cross-sectional area decreases in an extension direction away from the middle portion 125. In some embodiments, the outlet portion may be pocket-shaped, for example in a wedge-like or funnel shape. The inlet portion 118 may be at least partially limited by the outer flexible cover portion 113 and the intermediate flexible cover portion 107.

The supply channel 114 may be configured for supplying pressurized air to the outlet portion 119 such that an overpressure is generated in the outlet portion 119 forcing the pressurized air through the inner flexible cover portion 116. For that, and air supply device 200 may be provided. Features and possible configurations of the air supply device 200 are shown in Figures 1, 4, 6 and 7.

The air supply device 200 may be fluidly coupled to the air supply channel 114. The air supply device 200 may be at least partially arranged in the air supply channel 114. In the shown embodiment, the air supply device 200 is fully accommodated within the canopy and is fully arranged in the air supply channel114.

The supporting structure 300 may be configured to support the air supply device 200 and the flexible cover 101 thereon. The air supply device 200 may be arranged in the canopy 100 such that it is concealed within the multilayer structure when the canopy is viewed from outside. The air supply device 200 may be arranged in the opening defined by the inner edge portion 126. Accordingly, the air supply device 200 may fluidly couple the inlet portion 118 and the outlet portion 119.

The air supply device 200 may comprise a ventilation device 205 and/or a filtering device 203. Furthermore, the air supply device 200 may comprise a rigid housing 209 having an inlet 208 and one or more outlets 201. The ventilation device 205 and/or the filtering device 203, 204 may be arranged in a flow path between the inlet 208 and an outlet 201.

As already mentioned before, the supply channel 114 may comprise a meandering configuration. Following this construction, the air supply device 200 may be configured such that an inlet airflow direction is different from an outlet airflow direction. The air supply device 200 may comprise an outer portion 207 facing the outer flexible cover portion 113. The outer portion 207 may be a rigid wall of a housing of the air supply device 200. The inlet 208 may be provided in the outer portion 207. The air supply device 200 may further comprise an inner portion 206 facing an interior space 128 of the canopy 100. The inner portion 206 may comprise accommodating sections for accommodating a replaceable filtering device in the air supply channel 114.

Possible configurations and features of the supporting structure 300 will be described in the following. The supporting structure 300 is shown in Figures 1, 4, 5, 6 and 7.

The supporting structure 300 may comprise at least one rigid support member 301, 302. Each rigid support member may be configured and formed to support the flexible cover portions 107, 113, 116 at least partially. A first rigid support member 301 may support the flexible cover 101 at the first supporting portion 103. A second rigid support member 302 may support the flexible cover 101 at the second supporting portion 104. Each rigid support member 301, 302 may comprise a first frame portion 315, 316 for supporting an outer flexible cover portion 113 of the flexible cover 101. Each rigid support member 301, 302 may comprise a second frame portion 318, 319 for supporting an inner flexible cover portion 116 of the flexible cover 101. The first frame portion 315, 316 and the second frame portion 318, 319 may extend at a distance from and along each other over a predetermined length of the support member 301.

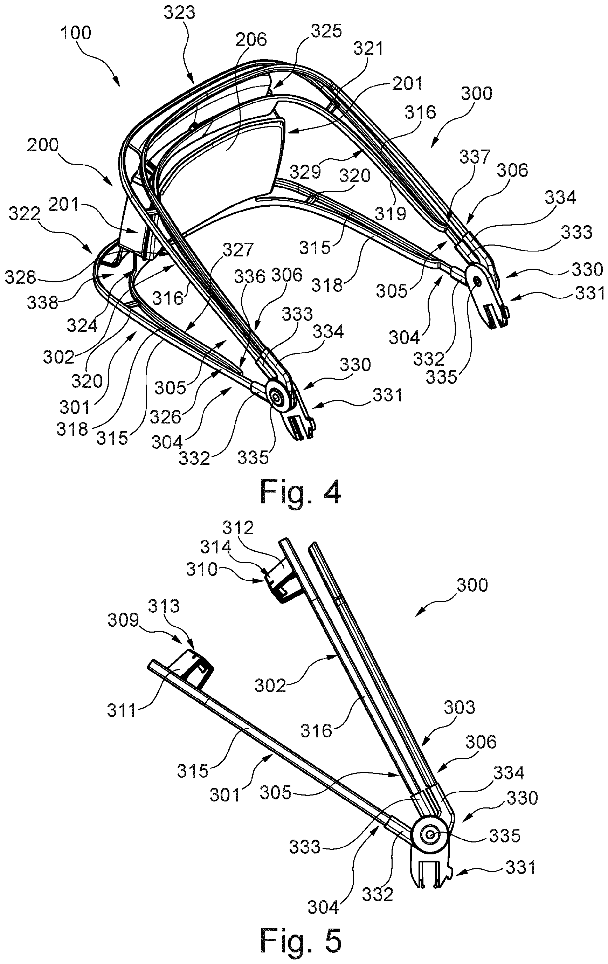

In the shown embodiment, each of the rigid support members may be U-shaped. It is, however, noted that other configurations of the rigid support members are possible. The rigid support members are configured to provide the flexible cover 101 with a predetermined fixed main shape. Accordingly, the rigid support members support the flexible cover 101 such that a specific shape of the flexible cover 101 is achieved. A rigid support member 301, 302 may comprise a skeleton structure in which the first frame portion 315, 316 and the second frame portion 318, 319 are formed as curved beams. Such a skeleton structure is shown in Figure 4, for instance. The beams may extend in a plane along a main extension direction. The beams may be coupled to each other at predetermined coupling portions by means of struts 320, 321. In addition or alternatively, the second frame portion 318, 319 may be arranged inside the first frame portion 315, 316. In other words, the first frame portion or at least portions thereof may surround portions of the second frame portion 318, 319. In addition or alternatively, the first frame portion 315, 316 and the second frame portion 318, 319 are both U-shaped. Each first frame portion 315, 316 and each second frame portion 318, 319 may comprise a base portion 322, 323, 324, 325 and two leg portions 326, 327, 328, 329. The leg portions 326, 327, 328, 329 extend from the respective base portion 322, 323, 324, 325 on opposite sides of the base portion. End portions of the leg portions 327, 329 of the second frame portion of 318, 319 may be fixedly coupled to the leg portions 326, 328 of the first frame portion 315, 316 at a coupling section 336, 337. Adjacent leg portions 326, 327, 328, 329 of the first frame portion 315, 316 may be arranged in a wedge-like manner, for example such that a distance between adjacent leg portions 326, 327, 328, 329 decreases towards the coupling section 336, 337. Each rigid support member 301, 302 may be integrally formed, for example by casting or molding. Each rigid support member may be manufactured from a plastics material. In some embodiments, the beams may form an opening 338 between them. The beams may be configured such that the opening 338 formed between them comprises a flat, crescent-like shape. The above-mentioned struts may extend through the opening 338 at different positions. Each rigid support member may comprise a symmetrical configuration.

The shape of the outer flexible cover portion 113 and the shape of the inner flexible cover portion 116 may be only defined by the shape and position of the at least one rigid support member 301, 302. An outer edge portion 127 of the intermediate flexible cover portion 107 may be at least partially positioned between the outer flexible cover portion 113 and the first frame portion 315, 316 in an overlapping region of the intermediate flexible cover portion 107 and the outer flexible cover portion 113. Two rigid support members 301, 302 may be provided. The flexible cover portions 107, 113, 116 may be supported on the two rigid support members 301, 302 thereby creating the inlet portion 118 and the outlet portion 119.

The inner edge portion 126 as described before which defines or limits the above-described opening in the air supply channel 114 may be fixedly held at a distance from the outer flexible cover portion and may be directly or indirectly fixedly coupled to the two rigid support members 301, 302. For example, the inner edge portion 126 may be fixedly coupled to the two rigid support members 301, 302 at a position between the first frame portion 315, 316 and the second frame portion 318, 319.

The supporting structure 300 may further comprise an adjustable support member 303 movable between a deployed configuration and a retracted configuration. In the deployed configuration the support member 303 is positioned remote from an adjacent rigid support member 302, in particular from its base portion, and the front portion 108 of the flexible cover 101 spanned between the rigid support member 302 and the support member 303 is tensioned. In the retracted configuration the support member 303 is folded against the adjacent rigid support member 302.

Each rigid support member 301, 302 and said optional support member 303 may be pivotably coupled to a coupling portion 330 for coupling the canopy 100 to the child carrying unit 10, 20. The coupling portion 330 may comprise an engaging portion 331 which is engageable with a mating receiving portion 14 provided on the child carrying unit 10, 20. The coupling portion may further comprise a first coupling section 332, a second coupling section 333 and a third coupling section 334 configured to be coupled to the first rigid support member 301, the second rigid support member 302 and the adjustable support member 303, respectively and are coupled to the engaging portion 331 by means of a pivot pin 335. The first coupling section 332 is configured to be coupled to a free end portion 304 of the leg portion 326. The second coupling section 333 is configured to be coupled to a free end portion 305 of the leg portion 328. The third coupling section 334 is configured to be coupled to a free end portion 306 of the adjustable support member 303.

The rigid support member 301, 302 may comprise a mounting portion 309, 310 configured to be coupled to a lateral portion of the air supply device 200. In addition or alternatively, the rigid support member 301, 302 may be configured to hold the air supply device 200 such that a gap is created between the outer flexible cover portion 113 and the air supply device 200. The gap may be a part of the air supply channel 114.

The mounting portion 309, 310 may be formed by a bridging portion 313, 314 coupled to the first frame portion 315, 316 at a first end portion thereof and to the second frame portion 318, 319 at a second end portion thereof. The bridging portion 313, 314 may comprise a shape such that at least a middle portion thereof is offset from the first frame portion 315, 316 towards the second frame portion 318, 319. In this way, a supporting surface 311, 312 for supporting the supply device 200 is inwardly offset from the first frame portion 315, 316 towards the second frame portion 318, 319.

The canopy may comprise two rigid support members 301, 302 wherein the air supply device 200 may be fixedly mounted to the rigid support members 301, 302 in a suspended manner. In this way, a mounted air supply device may form a rigid spacing element which holds the rigid support members 301, 301 at a predetermined distance from each other, in particular such that the flexible cover 101, in particular the multi-layer structure, supported on the rigid support members 301, 302 is in a tensioned condition so that the air supply channel 114 is formed as described before. Instead of an air supply device 200, a rigid member may be used as such spacing element.

The supporting structure 300 may further comprise a reinforcing portion 50 configured to provide a stiffened support of one rigid support member 301 against the child carrying unit 10, 20, for example against a seat backrest 21 of a child seat 20 or a wall portion 16 of the bassinet 10. The reinforcing portion 50 may accommodate or may be at least partially formed by an accumulator electrically coupled to the air supply device 200. Such a reinforcing portion 50 may be concealed under a flap 121 in flexible cover portion 106. The flap 121 may be openable and closeable by a zipper 122 which is operable by means of an operating member 123 operatively coupled to the zipper 122. The reinforcing portion 50 may be configured to be detachably mountable on the child carrying unit 10, 20, for example at different positions thereby allowing to fix the supporting structure 300 on the child carrying unit 10, 20 at different rotational positions.

At least in sections where the flexible cover 101 covers the air supply device 200 and/or an accumulator or other electric components, the flexible cover 101 may be made waterproof.

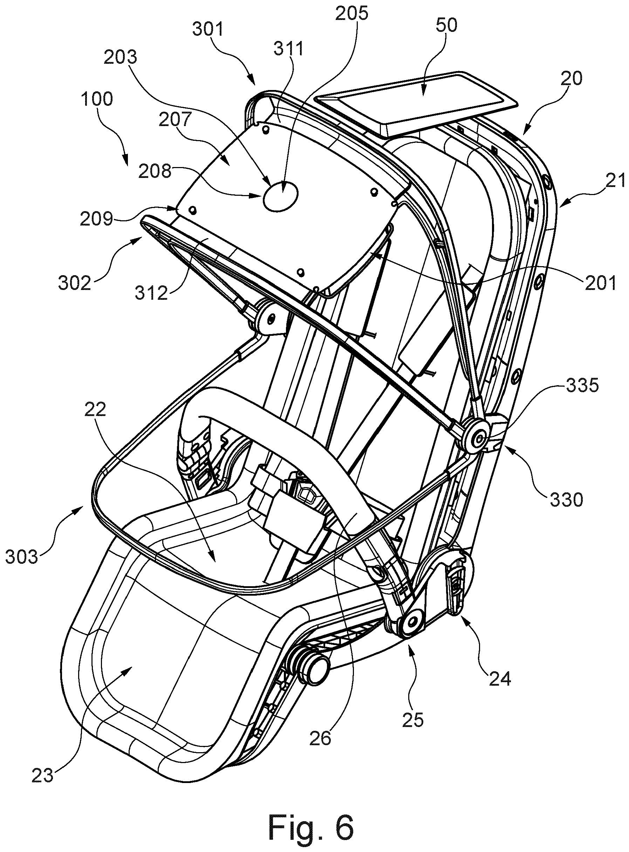

A child carrier 1 may comprise a child carrying unit 10, 20, a frame structure 30 for supporting the child carrying unit 10, 20 movably on the ground, and a canopy 100 comprising one or more of the features as described before and mounted on the child carrying unit 10, 24 covering at least a portion of the child carrying unit 10, 20 at which the head of the child is positioned during use of the child carrier 1. The frame structure 30 is shown in Figure 3 and may comprise a main frame 37 supported by wheels 34, 35. The main frame 37 is foldable about a joint 33. The joint 33 may be configured as a coupling portion for being coupled to a coupling section 15 of the bassinet 10 or a coupling section 24 of a child seat 20 as shown in Figure 6. A push bar 32 is coupled to the main frame 37 by means of frame members 31 received in said main frame 37.

At least a portion of the air supply device 200 may be provided remote from the canopy 100, in particular outside of the canopy 100. For example, the supply device 200 may comprise a ventilation device 205 and/or a filtering device 203, 204. The ventilation device 205 and/or a filtering device may be provided outside and/or remote from the canopy 100. For example, the ventilation device 205 and/or a filtering device may be provided on a portion of the child carrying unit 10, 20 such as a seat backrest 21 or under a bassinet base 11. A portion of the air supply device 200 or even the entire air supply device 200 may be provided on the frame structure 30 of a child carrier 1, for example in a cargo basket 36 arranged on the frame structure 30. For that, the cargo basket 36 may comprise an accommodating portion 39. The air supply device 200 or a portion thereof may be fluidly coupled to the air supply channel 114 by means of one or more air channels 40.

## Claims

1. Canopy (100) for a child carrying unit (10; 20), said canopy (100) comprising
a flexible cover (101) for at least partially covering a child, said flexible cover (101) comprising a multi-layer structure in which adjacent ones of two or more flexible cover portions (107, 113, 116) are arranged in an overlapping manner, and
a supporting structure (300) configured to support said flexible cover portions (107, 113, 116) such that at least a portion of an air supply channel (114) for passing air from an outside of said canopy (100) to an inside of said canopy (100) is formed between said flexible cover portions (107, 113, 116).

2. Canopy (100) according to claim 1, wherein said supporting structure (300) comprises
at least one rigid support member (301, 302) which is configured and formed to at least partially support said flexible cover portions (107, 113, 116),
wherein said rigid support member (301, 302) may comprise a first frame portion (315, 316) for supporting an outer flexible cover portion (113) of said flexible cover (101) and a second frame portion (318, 319) for supporting an inner flexible cover portion (116) of said flexible cover (101), wherein said first frame portion (315, 316) and said second frame portion (318, 319) may extend at a distance from and along each other over a predetermined length of said support member (301).

3. Canopy (100) according to claim 2,
wherein each of said rigid support members (301, 302) is U-shaped,
and/or wherein said rigid support members (301, 302) are configured to provide the flexible cover (101) with a predetermined fixed main shape,
and/or wherein said rigid support member (301) may comprise a skeleton structure with said first frame portion (315, 316) and said second frame portion (318, 319) being formed as curved beams,
wherein said beams may extend in a plane along a main extension direction and may be coupled to each other at predetermined coupling portions by means of struts (320, 321), and/or
wherein said second frame portion (318, 319) may be arranged inside said first frame portion (315, 316), and/or
wherein said first frame portion (315, 316) and said second frame portion (318, 319) are U-shaped, each with a base portion (322, 323, 324, 325) and two leg portions (326, 327, 328, 329) extending from said base portion (322, 323, 324, 325), wherein end portions of said leg portions (327, 329) of said second frame portion (318, 319) may be fixedly coupled to said leg portions (326, 328) of said first frame portion (315, 316) at a coupling section (336, 337),
wherein adjacent leg portions (326, 327, 328, 329) of said first frame portion (315, 316) and said second frame portion (318, 319) may be arranged in a wedge like manner, for example such that a distance between adjacent leg portions (326, 327, 328, 329) decreases towards said coupling section (336, 337),
wherein each rigid support member (301, 302) may be integrally formed, for example by casting or molding,
wherein said beams may form an opening (338) between them, for example a crescent like opening.

4. Canopy (100) according to any one of claims 2 and 3,
wherein said air supply channel (114) may comprise an inlet portion (118) having an inlet (112) and an outlet portion (119) having an outlet (120) defined by an air-permeable structure provided in said flexible cover portion (116),
wherein said air supply channel (114) may extend between said inlet (112) and said outlet (120) in a meandering manner,
wherein said inlet portion (118) may be configured to extend from a lateral outer side of the canopy (100) towards a middle portion (125) of the canopy, wherein said inlet portion (118) may extend laterally through said canopy (100) from one lateral side of the canopy (100) to the other lateral side of the canopy (100) such that two inlets (112) on opposite sides of the canopy (100) fluidly connect the inlet portion (118) with the outside,
wherein the inlet portion (118) and the outlet portion (119) may be fluidly coupled at the middle portion (125),
wherein said inlet portion (118) may be configured such that its cross-sectional area increases from said inlet (112) towards said middle portion (125),
wherein said outlet portion (119) may be configured such that its cross-sectional area decreases in an extension direction away from said middle portion (125),
wherein said outlet portion (119) may be pocket-shaped, for example in a wedge-like or funnel shape,
wherein in said outlet portion (119) said inner flexible cover portion (116) may comprise an air outlet (120), wherein said air outlet (120) may be defined by an air-permeable layer allowing air to pass the inner flexible cover portion (116),
wherein said air supply channel (114) may be configured for supplying pressurized air to said outlet portion (119) such that an overpressure is generated in said outlet portion (119) forcing said pressurized air through said inner flexible cover portion (116),
wherein the shape of said outer flexible cover portion (113) and the shape of said inner flexible cover portion (116) may be only defined by the shape of said at least one rigid support member (301, 302),
wherein said inlet portion (118) may be at least partially limited by said outer flexible cover portion (113) and an intermediate flexible cover portion (107),
wherein said outlet portion (119) may be at least partially limited by said inner flexible cover portion (116) and said intermediate flexible cover portion (107),
wherein an outer edge portion (127) of said intermediate flexible cover portion (107) is at least partially positioned between said outer flexible cover portion (113) and said first frame portion (315, 316) in an overlapping region of said intermediate flexible cover portion (107) and said outer flexible cover portion (113),
wherein two rigid support members (301, 302) may be provided,
wherein said flexible cover portions (107, 113, 116) may be supported on said two rigid support members (301, 302) thereby creating said inlet portion (118) and said outlet portion (119),
wherein an opening may be provided in a middle portion of the intermediate flexible cover portion (107), wherein an inner edge portion (126) of said intermediate flexible cover portion (107) defining or limiting said opening may be fixedly held at a distance from said outer flexible cover portion (113) and may be directly or indirectly fixedly coupled to said two rigid support members (301, 302) for example at a position between said first frame portion (315, 316) and said second frame portion (318, 319),
wherein two outlet portions (119) may be provided on opposite interior sides of said canopy (100), wherein each of said two outlet portions (119) may be configured to direct an airflow towards a head location portion of an interior space (128) of said canopy (100),
wherein each rigid support member (301, 302) may be pivotably coupled to a coupling portion (330) for coupling said canopy (100) to said child carrying unit (10, 20), and/or
wherein said supporting structure (300) may further comprise an adjustable support member (303) pivotably coupled to said coupling portion (330) and movable between a deployed configuration in which said support member (303) is positioned remote from an adjacent rigid support member (302) and a front portion (108) of said flexible cover (101) spanned between said rigid support member (302) and said support member (303) is tensioned, and a retracted configuration in which said support member (303) is folded against said adjacent rigid support member (302),
wherein said front portion (108) may comprise a window (117) and an openable and closeable flap (124) for temporarily covering said window (117).

5. Canopy (100) according to any one of claims 2 to 4, further comprising
an air supply device (200) at least partially arranged in said air supply channel (114),
wherein said rigid support member (301, 302) may be configured to support said air supply device (200) and said flexible cover (101) thereon,
wherein said air supply device (200) may be arranged in said canopy (100) such that it is concealed within said multi-layer structure when said canopy (100) is viewed from outside.

6. Canopy (100) according to claim 5,
wherein said air supply device (200) comprises a ventilation device (205) and/or a filtering device (203, 204) and/or a rigid housing (209) having an inlet (208) and at least one outlet (201), said ventilation device (205) and/or said filtering device (203, 204) being arranged in a flow path between said inlet (208) and said at least one outlet (201),
wherein said air supply device (200) may be configured such that an inlet airflow direction is different from an outlet airflow direction,
wherein said air supply device (200) comprises
an outer portion (207) facing said outer flexible cover portion (113), wherein said outer portion (207) may be a rigid wall of a housing of said air supply device (200), wherein said inlet (208) may be provided in said outer portion (207), and
an inner portion (206) facing an interior space of said canopy (100), wherein said inner portion (206) may comprise accommodating sections for accommodating a replaceable filtering device (203, 204) in said air supply channel (114).

7. Canopy (100) according to any one of claims 5 and 6,
wherein said rigid support member (301, 302) comprises a mounting portion (309, 310) configured to be coupled to a lateral portion of said air supply device (200) and/or configured to hold said air supply device (200) such that a gap is created between said outer flexible cover portion (113) of said flexible cover (101) and said air supply device (200), said gap forming a part of said air supply channel (114).

8. Canopy (100) according to claim 7,
wherein said mounting portion (309, 310) is formed by a bridging portion (313, 314) coupled to said first frame portion (315, 316) at a first end portion thereof and to said second frame portion (318, 319) at a second end portion thereof,
wherein said bridging portion (313, 314) comprises a shape such that at least a middle portion thereof is offset from said first frame portion (315, 316) towards said second frame portion (318, 319) so that a supporting surface (311, 312) for supporting said air supply device (200) is inwardly offset from said first frame portion (315, 316).

9. Canopy (100) according to one of claims 5 to 8, comprising two rigid support members (301, 302), wherein said air supply device (200) is fixedly mountable or fixedly mounted to said rigid support members (301, 302) in a suspended manner.

10. Canopy (100) according to one of claims 5 to 9,
wherein said supporting structure (300) further comprises a reinforcing portion (50) configured to provide a stiffened support of one rigid support member (301) against said child carrying unit (10; 20),
wherein said reinforcing portion (50) may accommodate or may be at least partially formed by an accumulator electrically coupled to said air supply device (200).

11. Canopy (100) according to any one of the preceding claims,
wherein said inlet (112) of said air supply channel (114) is provided in a lateral side of said canopy (100),
wherein said inlet (112) may be configured so as to be open in downward direction when said canopy (100) is mounted on said child carrying unit (10; 20).

12. Canopy (100) according to any one of the preceding claims,
wherein said air supply channel (114) comprises an outlet portion (119) separated from an inlet portion (118) by means of a layer (107) of said multi-layer structure,
wherein said air supply channel (114) is configured such that an airflow direction in said outlet portion (119) is at least partially opposite to an airflow direction in said inlet portion (118).

13. Canopy (100) according to any one of the preceding claims,
wherein said flexible cover (101) is made from a fabric and may at least partially comprise water-proof portions at least in sections covering said air supply device (200) and/or an accumulator.

14. Child carrier (1) comprising
a child carrying unit (10; 20),
a frame structure (30) for supporting said child carrying unit (10, 20) movably on the ground, and
a canopy (100) according to one of the preceding claims mounted on said child carrying unit (10, 20) for covering at least a portion of said child carrying unit (10, 20) at which the head of a child is positioned during use of said child carrier (1).

15. Child carrier (1) according to claim 14,
wherein at least a portion of said air supply device (200), for example a ventilation device (205) and/or a filtering device (203, 204), is provided remote from said canopy (100), for example on a portion of said child carrying unit (10; 20) such as a seat backrest (21) or under a bassinet base (11) and/or on said frame structure (30), for example in a cargo basket (36) arranged on said frame structure (30), wherein said portion of said air supply device (200) may be fluidly coupled to said air supply channel (114) by means of one or more air channels (40).
